**Europäisches Patentamt**

**European Patent Office**

**Office européen des brevets**

(19)

(11) Veröffentlichungsnummer : **0 367 898 B1**

(12) # EUROPÄISCHE PATENTSCHRIFT

(45) Veröffentlichungstag der Patentschrift :
**21.10.92 Patentblatt 92/43**

(51) Int. Cl.⁵ : **B65G 1/02,** B25H 3/04

(21) Anmeldenummer : **89108911.2**

(22) Anmeldetag : **18.05.89**

(54) **Vorrichtung zum Lagern von Werkzeugen, insbesondere Lagerregal für Spritzgiessformen.**

(30) Priorität : **08.11.88 DE 8813923 U**

(43) Veröffentlichungstag der Anmeldung :
**16.05.90 Patentblatt 90/20**

(45) Bekanntmachung des Hinweises auf die
Patenterteilung :
**21.10.92 Patentblatt 92/43**

(84) Benannte Vertragsstaaten :
**AT BE CH DE ES FR GB GR IT LI LU NL SE**

(56) Entgegenhaltungen :
**DE-A- 3 510 330
DE-U- 8 813 923
US-A- 2 841 289**

(73) Patentinhaber : **Wörner, Alois
Dreitorestrasse 6
W-7580 Bühl-Neusatz (DE)**

(72) Erfinder : **Wörner, Alois
Dreitorestrasse 6
W-7580 Bühl-Neusatz (DE)**

(74) Vertreter : **Geitz, Heinrich, Dr.-Ing.
Postfach 2708 Kaiserstrasse 156
W-7500 Karlsruhe 1 (DE)**

## Beschreibung

Die Erfindung bezieht sich auf eine Vorrichtung zum Largen von Werkzeugen mit wenigstens zwei beabstandet voneinander über eine Werkzeug-Seitenfläche vorstehenden und in der Nähe ihrer freien Enden mit unterseitigen Querausnehmungen versehenen Haltebolzen, die zumindest eine in Horizontallage verlaufende Tragschiene besitzt, deren Oberkante eine in der Einhängerast für die unterseitigen Querausnehmungen der Werkzeug-Haltebolzen bildet und dern unter der Einhängerast liegender Teil zum Abstützen der Werkzeug-Seitenfläche dient. Insbesondere bezieht sich die Erfindung auf ein Lagerregal für Kunststoff-Spritzgießformen.

Eine als Lagerregal für die Aufnahme von Spritzgießformen mit über seitliche Spannflächen vorstehenden Spannbolzen ausgebildete Vorrichtung dieser Art ist bereits offenkundig vorbenutzt (druckschriftlich nicht belegbar). Dabei handelt es sich um ein Traggestell mit mehreren übereinander angeordneten Tragschienen, deren Oberkanten als Rast zum Einhängen unterseitiger Ausnehmungen in den über seitliche Aufspannflächen der Werkzeuge vorstehenden Spannbolzen unter einem Winkel von etwa 45° nach rückwärts, also von der Anhängeseite abgewandt, abgekantet sind. Im abgehängten Zustand liegen die Werkzeuge mit ihrer jeweils einen Aufspannfläche an den sich im wesentlichen in Vertikalebenen erstreckenden Tragschienen an und sind infolge Schwerkraft in ihren Abhängelagen gehalten.

In der DE-A-35 10 330 ist auch schon ein ganz ähnliches Lagerregal vorbeschrieben, bei dem anstelle der mit ihren Oberkanten Einhängerasten bildenden Tragschienen bei der offenkundig vorbenutzten Vorrichtung vertikal angeordnete Tragplatten dienen, die jeweils mit wenigstens einer im Bereich einer Einhängeausnehmung aus der Plattenebene herausgeformten Rast versehen sind.

Derartige Vorrichtungen ermöglichen eine übersichtliche Werkzeug-Lagerhaltung und vor allem einen schnellen Zugriff auf jeweils benötigte Werkzeuge. Dies ist im Hinblick auf kurze Maschinen-Rüstzeiten beim Werkzeugwechsel von Bedeutung.

Obgleich die Werkzeuge durch ihr Eigengewicht sicher in ihren Abhängelagen gehalten sind, kann ein zufälliges Aushängen dann nicht ausgeschlossen werden, wenn etwa ein an einer derartigen Regalanlage entlang fahrender Gabelstapler oder dergleichen ein abgehängtes Werkzeug anstößt und dadurch die unterseitigen Querausnehmungen der eingehängten Haltebolzen außer Eingriff mit der Einhängerast bringt.

Aufgabe der Erfindung ist es daher, eine wirksame Sicherung dagegen zu schaffen, daß ordnungsgemäß in einem Lagerregal oder an einer Tragschiene der eingangs angegebenen Vorrichtung abgehängte, also deponierte Werkzeuge durch zufälliges Anstoßen aus ihren Abhängelagen ausgehoben werden und dann beim Herunterfallen einerseits Unfallgefahren verursachen und andererseits zu Bruch gehen oder zumindest beschädigt werden können.

Gelöst ist diese Aufgabe dadurch, daß bei der Vorrichtung nach dem Oberbegriff des Patentanspruchs 1 eine Sicherungseinrichtung für eingehängte Werkzeuge vorgesehen ist, die aus einer sich längs der Einhängerast der Tragschiene in einem vertikalen Abstand, der kleiner als die Dicke der Werkzeug-Haltebolzen, aber größer als deren Stärke im Bereich der eingehängten Querausnehmungen ist, erstreckenden Sicherungsschiene besteht, die senkrecht zur Längserstreckung der Tragschiene nach der von einem angehängten Werkzeug abgewandten Seite aus ihrer zumindest einen in die Einhängerast eingehängten Werkzeug-Haltebolzen übergreifenden Sicherungsstellung in die den Haltebolzen freigebenden Entriegelungsstellung und umgekehrt betätigbar ist.

Es handelt sich bei der Erfindung somit darum, daß eine mechanisch wirksame Sicherungseinrichtung vorgesehen ist, die in der Sicherungslage die mit ihren unterseitigen Querausnehmungen auf der Einhängerast ruhenden Werkzeug-Haltebolzen formschlüssig übergreift, so daß diese bei in Sicherungslage stehender Sicherungseinrichtung aus ihren Abhängelagen nicht aushängbar sind. Aushängbar sind so gesicherte Haltebolzen nur nach vorheriger Betätigung der Sicherungseinrichtung in ihre Entriegelungsstellung.

Die zwischen der Sicherungslage und der Entriegelungsstellung betätigbare Sicherungsschiene kann in ihren jeweiligen Endpositionen durch mechanische Mittel gehalten oder in sonstiger Weise arretiert werden. Als besonders vorteilhaft hat sich jedoch eine Weiterbildung der Erfindung dahingehend erwiesen, daß die Sicherungsschiene durch Federkraft in ihrer Sicherungslage gehalten und gegen die Wirkung wenigstens einer Rückstellfeder in ihre Entriegelungsstellung betätigbar ist. Die Rückstellfeder beaufschlagt somit die Sicherungsschiene in Richtung ihrer Sicherungslage, so daß die unbetätigte Sicherungsschiene grundsätzlich immer in der Sicherungslage steht. Zweckmäßigerweise kann sie dabei an einem der Tragschiene ortsfest zugeordneten Anschlag anliegen, der die Bewegbarkeit der Sicherungsschiene in Richtung ihrer Sicherungslage begrenzt.

Ein einfacher und vorteilhafter Vorrichtungsaufbau ergibt sich, wenn gemäß einer anderen Weiterbildung die Sicherungsschiene mittels mehrerer als Rückstellfedern ausgebildeter schmaler Befestigungslaschen, die in Tragschienen-Längsrichtung in vorbestimmten Abständen voneinander angeordnet sind, an die Tragschiene bzw. deren Tragteile angelenkt ist.

Bei einer derartigen Ausbildung der Sicherungsschiene gelingt in einfacher Weise deren Bewegung senkrecht zur Flächenerstreckung der zugeordneten Tragschiene, wobei die Sicherungsschiene unter Federkraft jeweils in ihre durch einen Anschlag bestimmte Sicherungslage zurückfedert.

Gemäß einer anderen wichtigen Ausgestaltung besitzt die Sicherungsschiene einen zur Einhängerast der Tragschiene hin abgekanteten Randflansch, der in der Sicherungsstellung die Endabschnitte von in die Einhängerast eingehängten Werkzeug-Haltebolzen oberseitig übergreift und dadurch in ihren Einhängelagen sichert.

Ein derartig ausgebildeter Randflansch ermöglicht auch bei in Sicherungslage stehender Sicherungsschiene ein unbehindertes Einhängen der seitlich vorstehenden Haltebolzen eines Werkzeugs in die Einhängerast der Tragschiene, indem die vorstehenden Enden der Haltebolzen dabei auf den Randflansch auftreffen und dadurch die Sicherungsschiene aus ihrer Sicherungslage nach rückwärts, also nach der von der Einhängeseite der Werkzeuge abgewandten Seite in die Entriegelungsstellung verdrängen. Sobald die Werkzeug-Haltebolzen mit ihren unterseitigen Querausnehmungen in die Rast der Tragschiene eingehängt sind, federt hingegen die Sicherungsschiene angesichts ihrer Beaufschlagung durch wenigstens eine Rückstellfeder in die Sicherungslage zurück, in welcher der erwähnte Randflansch die dann eingehängten Werkzeug-Haltebolzen oberseitig übergreift.

Während die Sicherungsschiene angesichts ihrer Federkraftbeaufschlagung aus der Entriegelungsstellung jeweils selbsttätig in ihre Sicherungslage zurückkehrt, bedarf es einer besonderen Betätigung aus der Sicherungslage in die Entriegelungsstellung. Dafür kann ein spezieller Ausrückhebel an der Sicherungsschiene vorgesehen sein.

Eine Ausführungsform der erfindungsgemäßen Vorrichtung mit Sicherungseinrichtung soll nachstehend anhand der beigefügten Zeichnungen erläutert werden. In schematischen Ansichten zeigen:

Fig. 1 eine Seitenansicht eines für die Aufnahme von Spritzgießformen bestimmten Lagerregals mit mehreren an Ständerprofilen übereinander angeordneten Tragschienen,

Fig. 2 einen Vertikalschnitt gemäß der Schnittlinie II-II in Fig. 1 durch das Lagerregal,

Fig. 3 einen vergrößerten Ausschnitt aus Fig. 2 mit zwei übereinander angeordneten Tragschienen und an letzteren abgehängten und in der Abhängelage gesicherten Werkzeugen,

Fig. 4 in einer gegenüber Fig. 3 nochmals vergrößerten Schnittansicht die Sicherung eines abgehängten Werkzeugs und

Fig. 5 das Einhängen eines Werkzeugs bei gleichzeitiger Betätigung der Sicherungseinrichtung aus ihrer Sicherungslage.

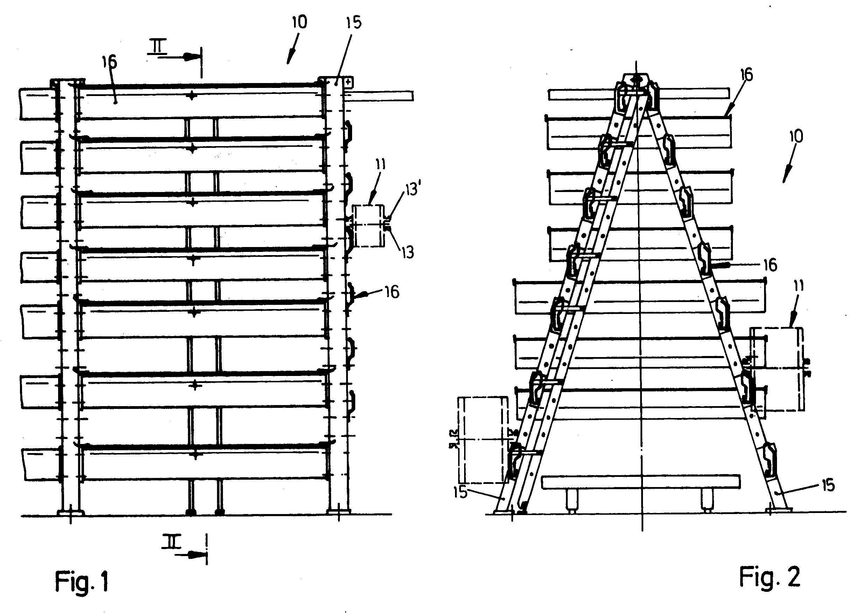

Das in den Fig. 1 und 2 in Gesamtansichten gezeigte Lagerregal 10 dient zum Verwahren von Werkzeugen 11, von denen in diesen Figuren einige in dünnen gestrichelten Linien angedeutet sind. Bei diesen Werkzeugen handelt es sich um Spritzgießformen mit jeweils vier über die beiden seitlichen Werkzeug-Aufspannflächen 12 vorstehenden Haltebolzen 13, 13', die paarweise in horizontalem Abstand voneinander und in Bezug auf einander rechtwinklig schneidende Hauptträgheitsachsen der Aufspannflächen symmetrisch angeordnet sind. In der Nähe ihrer freien Enden haben diese Haltebolzen U-förmige Querausnehmungen 14, 14', die bei den unteren Haltebolzen 13 zur Werkzeugunterseite und bei den oberen Haltebolzen 13' zur Werkzeugoberseite hin offen sind.

Das Lagerregal umfaßt hier nicht weiter interessierende Ständerprofile 15, an denen übereinander als Tragschienen mehrere langgestreckte Profilschienen 16 mit einem sich jeweils in einer Ebene erstreckenden Mittelteil 17 und einer als Einhängerast 18 aus der Mittelteilebene nach rückwärts zu den Stärderprofilen 15 hin abgebogenen Oberkante befestigt sind. Unterseitig gehen die Profil-Mittelteile 17 der Tragschienen in ebenfalls nach rückwärts angeformte C-förmige Bereiche 19 mit sich etwa parallel zu den Mittelteilen erstreckenden rückseitigen Randflanschen 20 über.

Mit diesen Randflanschen sind mittels Schrauben 22 in Tragschienenlängsrichtung in vorbestimmten Abständen voneinander federnde Befestigungslaschen 24 verbunden, die sich etwa in Parallellage zu den Profilmittelteilen 17 erstrecken und an deren von den rückseitigen Randflanschen 20 der Tragschienen entfernten Enden die unterseitigen Enden von Sicherungsschienen 25 mittels Nieten 26 angeschlossen sind.

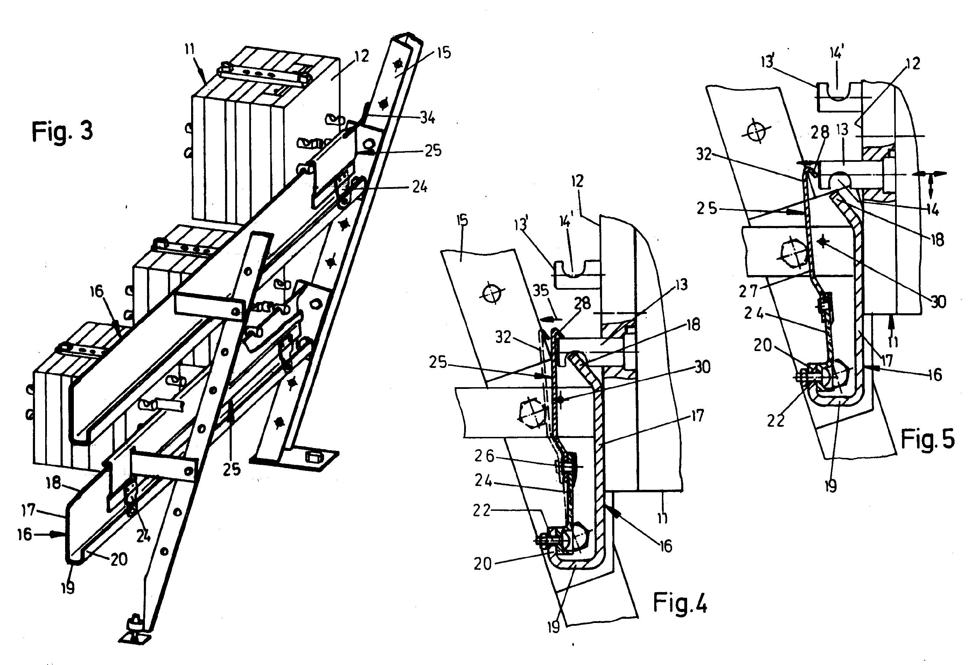

Jede Sicherungsschiene 25 hat einen sich rückwärts hinter der jeweils zugeordneten Tragschiene 16 etwa parallel zu deren Mittelteil erstreckenden Schienensteg 27, der bis über die Einhängerast 18 reicht und eine oberseitige Abkantung, die einen etwa unter 45° gegenüber der Horizontalen abwärts zur zugeordneten Einhängerast hin gerichteten Randflansch 28 bildet. In der Sicherungslage erstrecken sich diese Randflanschen 28 über der jeweiligen Einhängerast 18 der zugeordneten Tragleiste entlang und übergreifen in die Einhängerast mit ihren unterseitigen Querausnehmungen 14 eingehängte Haltebolzen 13 oberseitig, wie dies insbesondere aus den Fig. 3 und 4 ersichtlich ist. In der Sicherungslage liegen die Sicherungsschienen 25 an am Traggestänge der Tragschienen 16 angebrachten Anschlägen 30 an, an die sie durch die Rückstellkraft der als Rückstellfeder wirkenden Befestigungslaschen 24 gedrückt werden. Zum manuellen Betätigen der Sicherungsschienen 25 gegen die Rückstellwirkung der federnden Befestigungslaschen 24 in eine die freien Enden eingehängter Haltebolzen 13 freigebende Position, die in Fig. 5 gestrichelt bei 32 angedeutet ist, dient je ein einer jeden Sicherungsschiene zugeordneter Ausrückhebel 34 (Fig.3).

Das Einhängen eines Werkzeugs 11 in die Einhängerast 18 einer Tragschiene 16 des Lagerregals 10 geschieht in der Weise, daß das Werkzeug 11 mit den sich über eine seiner seitlichen Aufspannflächen 12 vorstehenden Haltebolzen seitlich an die betreffende Tragschiene 16 herangeführt wird, bis der sich unter den unteren Haltebolzen 13 forterstreckende Teil der Werkzeug-Aufspannfläche 12 am Mittelteil 17 der betreffenden Tragschiene anliegt und die unteren Haltebolzen mit den nach unten offenen Querausnehmungen 14 über der Einhängerast 18 der Tragschiene 16 stehen, worauf das Werkzeug bei Aufrechterhaltung der Anlage der Werkzeug-Aufspannfläche am Mittelteil der Tragschiene abgesenkt wird, um die unterseitigen Querausnehmungen 14 der unteren Haltebolzen 13 in eine formschlüssige Einhängelage mit der nach rückwärts abgebogenen Einhängerast 18 zu bringen. In dieser Einhängelage übergreift der nach vorn zur Einhängerast hin gerichtete Randflansch 28 der zugeordneten Sicherungsschiene 25 die eingehängten Haltebolzen 13 oberseitig und sichert diese in ihren Einhängelagen.

Zum Aushängen eines Werkzeugs 11 aus der in Fig. 4 gezeigten Einhängelage muß zunächst mittels des der betreffenden Sicherungsschiene 25 zugeordneten Ausrückhebels 34 die Sicherungsschiene aus ihrer Sicherungslage in die in Fig. 4 in gestrichelten Linien bei 32 angedeutete Ausrücklage betätigt werden, also um die durch die Verschraubung der Befestigungslaschen 24 gebildete Anlenkachse an der jeweiligen Tragschiene in Richtung des Pfeils 35 verschwenkt werden. Wenn die der Rückstellkraft der Befestigungslaschen 24 entgegengerichteten Ausrückkraft entfällt, kehren die Sicherungsschienen 25 in ihre durch Anschläge 30 begrenzten Sicherungslagen zurück.

Beim Einhängen eines Werkzeugs 11 bedarf es hingegen keiner manuellen Betätigung der Sicherungsschienen 25 in ihre Ausrücklagen, denn beim Heranführen eines Werkzeugs an eine Tragschiene 16 befinden sich die unteren Haltebolzen 13 des Werkzeugs in einer Lage über der Einhängerast 18 der betreffenden Tragschiene. Insofern treffen beim Heranführen eines Werkzeugs senkrecht zur Längenerstreckung der betreffenden Tragschiene 16 die stirnseitigen Enden der Haltebolzen 13 auf den abgekanteten Randflansch 28 und drängen die Sicherungsschiene 25 in die auch in Fig. 5 bei 32 angedeutete Entriegelungsstellung, in der ein Einhängen der Haltebolzen 13 mit ihren unterseitigen Querausnehmungen 14 in die Einhängerast 18 der Tragschiene gelingt. Danach federt, wie oben bereits erläutert, die Sicherungsschiene mit ihrem Randflanschen 28 in die Sicherungslage zurück, in der die Enden der eingehängten Haltebolzen 13 von dem genannten Randflansch übergriffen werden.

## Patentansprüche

1. Vorrichtung zum Lagern von Werkzeugen mit wenigstens zwei beabstandet voneinander über eine Werkzeug-Seitenfläche vorstehenden und in der Nähe ihrer freien Enden mit unterseitigen Querausnehmungen versehenen Haltebolzen, die zumindest eine in Horizontallage verlaufende Tragschiene besitzt, deren Oberkante eine Einhängerast für die unterseitigen Querausnehmungen der Werkzeug-Haltebolzen bildet und deren unter der Einhängerast liegender Teil eine Abstützfläche für die Werkzeug-Seitenfläche dient, insbesondere Lagerregal für Kunststoff-Spritzgießformen,
dadurch gekennzeichnet,
daß eine Sicherungseinrichtung für eingehängte Werkzeuge vorgesehen ist, die aus einer sich längs der Einhängerast (18) der Tragschiene (16) in einem vertikalen Abstand, der kleiner als die Dicke der Werkzeug-Haltebolzen (13), aber größer als deren Stärke im Bereich der Querausnehmungen (14) ist, erstreckenden Sicherungsschiene (25) besteht, welche senkrecht zur Längserstreckung der Tragschiene (16) nach der von einem angehängten Werkzeug abgewandten Seite aus ihrer zumindest einen in die Einhängerast (18) eingehängten Werkzeug-Haltebolzen (13) übergreifenden Sicherungslage in die den Haltebolzen freigebende Entriegelungsstellung und umgekehrt betätigbar ist.

2. Vorrichtung nach Anspruch 1, dadurch gekennzeichnet, daß die Sicherungsschiene (25) durch Federkraft in ihrer Sicherungslage gehalten und gegen die Wirkung wenigstens einer Rückstellfeder (24) in ihre Entriegelungsstellung betätigbar ist.

3. Vorrichtung nach Anspruch 2, dadurch gekennzeichnet, daß die Sicherungsschiene (25) in ihrer Sicherungslage an einem der Tragschiene (16) ortsfest zugeordneten Anschlag (30) anliegt.

4. Vorrichtung nach Anspruch 2 oder 3, dadurch gekennzeichnet, daß die Sicherungsschiene (25) mittels einer als Rückstellfeder ausgebildeten Befestigungslasche (24), die sich im wesentlichen in Parallellage zur Tragschiene (16) erstreckt, an letztere bzw. deren Tragteile angelenkt ist.

5. Vorrichtung nach einem der Ansprüche 1 bis 4, dadurch gekennzeichnet, daß die Sicherungsschiene (25) einen zur Einhängerast (18) der Tragschiene (16) abgekanteten Randflansch (28) besitzt, der in der Sicherungsstellung die Endabschnitte von in die Einhängerast eingehängten Werkzeug-Haltebolzen (13) oberseitig übergreift.

6. Vorrichtung nach einem der Ansprüche 1 bis 5, gekennzeichnet durch einen an der Sicherungsschiene (25) angeordneten Ausrückhebel (34) zum Betätigen der Sicherungsschiene in die Entriegelungsstellung.

**Claims**

1. Device for the storage of tools with at least two mutually spaced apart retaining pins which project beyond one tool side surface are provided in the proximity of their free ends and at the underside with transverse recesses, wherein the device possesses at least one carrier rail which extends in horizontal position and the upper edge of which forms a suspension rest for the underside transverse recesses of the tool retaining pins while the part of the rail lying below the suspension rest serves as a support surface for the tool side surface, especially deposit shelving for plastics material injection moulds, characterised thereby that there is provided a security equipment for suspended tools, consisting of a security bar (25) which extends longitudinally of the suspension rest (18) of the carrier rail (16) at a vertical spacing smaller than the thickness of the tool pin (13) but larger than the width thereof in the region of the transverse recesses (14) and which is actuable, perpendicularly to the longitudinal direction of the carrier rail (16) and towards the side remote from a suspended tool, from its at least one security position engaging over a tool pin (13) suspended at the suspension rest (18) and into a release setting freeing the retaining bolt and conversely.

2. Device according to claim 1, characterised thereby that the security bar (25) is held in its security position by spring force and is actuable into its release setting against the effect of at least one restoring spring (24).

3. Device according to claim 2, characterised thereby that the security bar (25) lies in its security position against an abutment (30) fixedly associated with the carrier rail (16).

4. Device according to claim 2 or 3, characterised thereby that the security bar (25) is articulated to the carrier rail (16) or carrier part thereof by means of a fastening strap (24) which is constructed as a restoring spring and extends substantially in parallel position to the carrier rail (16).

5. Device according to one of claims 1 to 4, characterised thereby that the security bar (25) possesses an edge flange (28) which is folded over towards the suspension rest (18) of the carrier rail (16) and which in the security setting engages over the end portion, at its upper side, of a tool pin (13) suspended at the suspension rest.

6. Device according to one of claims 1 to 5, characterised by a disengaging lever (34), which is arranged at the security bar (25), for the actuation of the security bar into the release setting.

**Revendications**

1. Installation pour le stockage de moules, comportant au moins deux boulons d'arrêt, en saillie au-dessus d'une surface latérale du moule, à une certaine distance l'un de l'autre et pourvus, au voisinage de leurs extrémités libres, d'évidements transversaux disposés par en-dessous, dispositif possédant au moins un rail porteur courant en position horizontale, dont l'arête supérieure forme, dans le cran d'accrochage destiné aux évidements transversaux disposés par en-dessous, le boulon d'arrêt de l'outil, et dont la partie disposée en-dessous du cran d'accrochage sert au soutènement de la surface latérale du moule, en particulier un rayonnage de stockage pour moules d'injection de matières plastiques,
caractérisée en ce qu'on prévoit un dispositif de blocage pour moules suspendus, dispositif constitué d'un rail de blocage (25), qui s'étend longitudinalement le long du cran d'accrochage (18) du rail porteur (16), à une certaine distance verticale, qui est inférieure à l'épaisseur du boulon d'arrêt du moule (13) mais est supérieure à son épaisseur dans la zone des évidements transversaux (14), rail de blocage qui peut être manoeuvré perpendiculairement à l'étendue longitudinale du rail porteur (16), vers le côté opposé à un moule suspendu, à partir de sa position de blocage, qui recouvre au moins un boulon d'arrêt de moule (13) suspendu dans le cran d'accrochage (18), pour arriver à la position de déverrouillage, qui libère le boulon d'arrêt, et inversement.

2. Installation selon la revendication 1, caractérisée en ce que le rail de blocage (25) est maintenu dans sa position de blocage par la force d'un ressort et peut être manoeuvré, contre l'effet d'au moins un ressort de rappel (24), pour arriver dans sa position de déverrouillage.

3. Installation selon la revendication 2, caractérisée en ce que le rail de blocage (25) s'appuie, en position de blocage, contre une butée (30) affectée à demeure au rail porteur (16).

4. Installation selon la revendication 2 ou 3, caractérisée en ce que le rail de blocage (25) est, à l'aide d'un collier de fixation (24), lequel est congru comme un ressort de rappel et s'étend essentiellement parallèlement au rail porteur (16), articulé à ce dernier ou à ses éléments porteurs.

5. Installation selon l'une des revendications 1 à 4, caractérisée en ce que le rail de blocage (25) possède une collerette marginale (28), repliée vers le cran d'accrochage (18) du rail porteur (16), collerette qui, en position de blocage, recouvre par le haut les zones terminales de boulons d'arrêt de moule (13) suspendus dans le cran d'accrochage.

6. Installation selon l'une des revendications 1 à 5, caractérisée par un levier de débrayage (34), rapporté contre le rail de blocage (25), et destiné à amener le rail de blocage dans la position de déverrouillage.

Fig. 2

Fig. 1

Fig. 3

Fig. 4

Fig. 5

8

EP 0 367 898 B1